# EUROPEAN PATENT APPLICATION

(11) **EP 4 711 660 A1**
(43) Date of publication of application: **18.03.2026**
(21) Application number: 24306505.9
(22) Date of filing: 13.09.2024
(51) Int. Cl.: F16L 59/065, F16L 59/14, F16L 59/153, F16L 27/10, B64F 1/28

(54) **TRANSFER LINE ARRANGEMENT**

(71) Applicant: Nexans, 92400 Courbevoie (FR)
(72) Inventor: GÜNZEL, Gerald, 92400 COURBEVOIE (FR); COMBESSIS, Anthony, 92400 COURBEVOIE (FR); EGERER, Ralf, 92400 COURBEVOIE (FR); DUCLOT, Yann, 92400 COURBEVOIE (FR)
(74) Representative: Cabinet Boettcher

(57) **Abstract**

A transfer line arrangement (200) comprises a transfer line (201, 220) for fluids and a support structure (116, 117, 118) attached to the transfer line. The transfer line comprises flexible sections (202) enabling pivotable movement of the transfer line around an axis such that one end of the transfer line is connectable to a connector at a fluid source (107) for a fluid and the other end of the transfer line is connectable with a connector (111) at a tank to be filled with fluid. The transfer line comprises vacuum insulated multiwalled tubes.

## Description

### Field

The present disclosure relates to a transfer line arrangement that is leak tight by design.

### Background

In recent years, as the problem of global warming has intensified, efforts have been made to expand the use of natural energy sources (renewable energy sources) such as sunlight, wind power, hydropower, and geothermal power as energy sources to replace fossil fuels such as oil and natural gas. Natural energy is currently converted almost exclusively into electrical energy, but electricity cannot be stored in large quantities, and transportation losses are also large. Therefore, the possibility of using natural energy sources to produce and effectively use liquefied cryogenic hydrogen, which can be stored in large quantities and transported over long distances, has been investigated for several years.

Cryogenic media, also known as cryogenic fluids, are often transported on ships, in tanker wagons or on tanker trucks. Important examples include liquefied natural gas (LNG), which has an evaporating temperature of -162°C (111 K), liquid nitrogen with an evaporating temperature of -196°C (77 K), liquid hydrogen (evaporating temperature -253°C, 20 K) or liquid helium (evaporating temperature -269°C, 4 K). The transfer from one tank to another during loading is typically accomplished with vacuum insulated lines and couplings.

With this in mind, development of cryogenic liquid hydrogen transfer technologies is urgently needed. Various loading systems are used for the transfer of cryogenic liquefied gases from one tank to another tank, as it occurs during refueling from a storage reservoir to a fuel tank of a vehicle or an aircraft.

For instance, for refueling aircrafts, it is known to connect a rubber tube on one side with a fuel distribution system and with a fuel tank of the aircraft on the other side. However, such massive rubber tubes are very heavy and difficult to handle for personnel. Therefore, alternatively pantograph tube systems are used for that purpose providing the required flexibility to compensate for distances and height differences between the connector of a fuel distribution system and the fuel tank of the aircraft. To this end, the transfer line forming the pantograph comprises rigid tube sections which are connected with swivel joints providing the required flexibility of the pantograph. However, conventional swivel joints are not completely leak tight and are subject to wear.

Recently, efforts are made to replace fossil fuels by liquid hydrogen as aircraft fuel. This is also challenging regarding the refueling of the aircraft. Firstly, liquid hydrogen is very temperature sensitive because of its low boiling point. Therefore, any kind of single wall tube is no option for transferring liquid hydrogen because the boil-off losses would by far be too high. Secondly, gaseous hydrogen is very futile and escapes in considerable amounts from conventional swivel joints. This is particularly undesirable because a mixture of cases hydrogen and atmospheric oxygen presents a serious explosion and fire hazard.

In view of the limitations of existing transfer systems for fluids there remains a desire for a transfer line arrangement to overcome or at least improve one or more of the problems mentioned at the outset.

### Description of the disclosure

According to a first aspect the present disclosure suggests transfer line arrangement comprising a transfer line for fluids and a support structure attached to the transfer line. The transfer line comprises flexible sections enabling pivotable movement of the transfer line around an axis such that one end of the transfer line is connectable to a connector at a fluid source for a fluid and the other end of the transfer line is connectable with a connector at a tank to be filled with fluid. The transfer line comprises vacuum insulated multiwalled tubes.

The transfer line arrangement according to the present disclosure is a suitable to overcome distances and height differences between the fluid source and a tank to be filled with fluid. The vacuum insulated multiwalled tubes permit to transfer also temperature sensitive fluids which cannot be transferred with conventional transfer systems such as pantographs.

In a preferred embodiment the transfer line arrangement comprises rigid and flexible sections enabling compensating distance and difference in height between the connector of the fluid source and the connector of the tank to be filled.

The flexible line sections are implemented only on an as needed basis to provide for the required flexibility while the less costly rigid transfer lines are used where it is possible.

Preferably, multiwalled corrugated tubes form the flexible sections of the transfer line. Multiwalled corrugated tubes are particularly useful for the flexible line sections because they enable pivotable movement while at the same time leak tightness is preserved.

Advantageously, the flexible sections are provided with gimbals limiting the degrees of freedom of the flexible sections. The gimbals can be employed to protect the flexible line sections from damages caused by overbending.

Expediently, the transfer line comprises rigid multiwalled tube sections connected by the flexible sections.

In an advantageous embodiment the support structure is movable in a horizontal plane. Movable support structures carry the weight of the transfer line arrangement and are therefore advantageous because the they facilitate the work of personnel handling the transfer line arrangement.

In a useful embodiment the support structure can comprise a deflection arm fixed to an immobile object. The immobile object may be a wall or something similar to which the deflection arm is connected and carries the weight of the transfer line. The deflection arm may comprise a plurality of swivel joints enhancing the flexibility of the deflection arm.

With advantage the support structure comprises a rollable carrier that can role in all directions in a horizontal plane. The rollable carrier is for instance composed of a chassis resting on a number of swivel castors.

Finally, in one embodiment the transfer line is composed in its entirety by a multiwalled flexible tube resting on the support structure. In special cases it is advantageous to have a maximum of flexibility which is provided by the flexible tube that extends over the entire length of the transfer line arrangement.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a conventional pantograph as it is used for re-fueling an aircraft;
- Figs. 2A, 2B: transfer line arrangements according to the present disclosure with rigid tube sections; and
- Fig.3: a transfer line arrangement according to the present disclosure which is flexible over its entire length.

### Detailed description

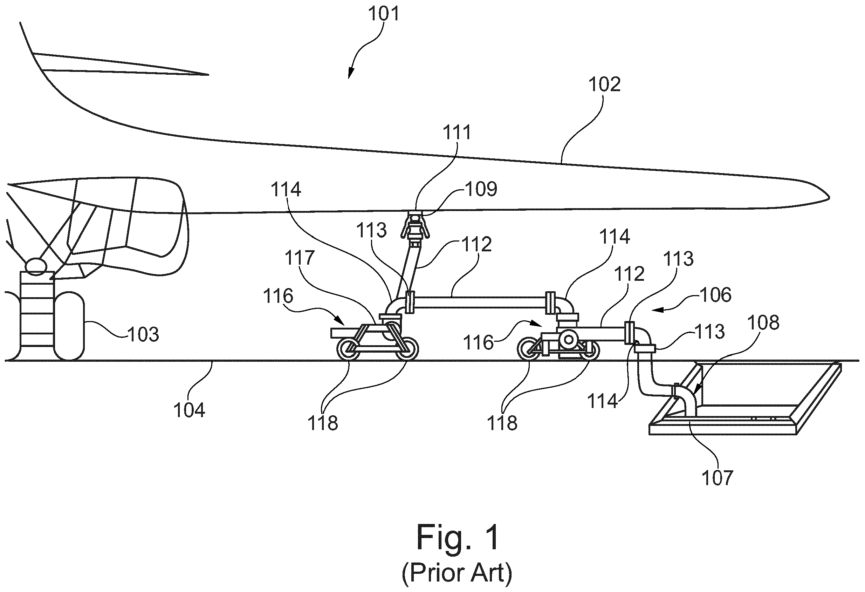

Figure 1 schematically indicates an aircraft 101 on an airport and shows a wing 102 of the aircraft 101 and a landing gear 103 that rests on a ground 104 of a parking position on the airport. In the situation shown in Figure 1, the aircraft 101 is refueled by means of a conventional pantograph 106 from a fuel hydrant system providing aircraft fuel through permanently installed underground pipes (not shown). Figure 1 only shows an underground hydrant 107 of the hydrant system. The pantograph 106 connects with its one end 108 with the underground hydrant 107 and with each other end 109 with tank connection 111 of the aircraft 101. For this purpose, the ends of the pantograph are provided for example with quick - connect - quick - disconnect - couplings (QC/QD couplings) that are known in the prior art.

The pantograph 106 comprises several rigid pipes 112 which are connected via swivel joints 113 with 90° bends 114. The pantograph 106 rests on carriers 116 composed of a chassis 117 resting on swivel castors 118 to allow service personal to manually move the pantograph 106 on the ground 104 and to adapt the length of the pantograph 106 and the height difference between the ends 107, 108 of the pantograph 106. This arrangement enables the pantograph 106 to bridge the distance between the underground hydrant 107 of the fuel hydrant system and the tank connection 111 of the aircraft 101. However, conventional pantographs 106 are conceived for conventional fossil fuels but not appropriate for cryogenic fluids, in particular not for liquid hydrogen (LH2) because pipes and/or tubes of conventional pantographs 106 comprise only single walled pipes and/or tubes. Another reason is that conventional swivel joints 113 are not sufficiently leak tight to prevent the escape of hydrogen because gaseous hydrogen is very volatile.

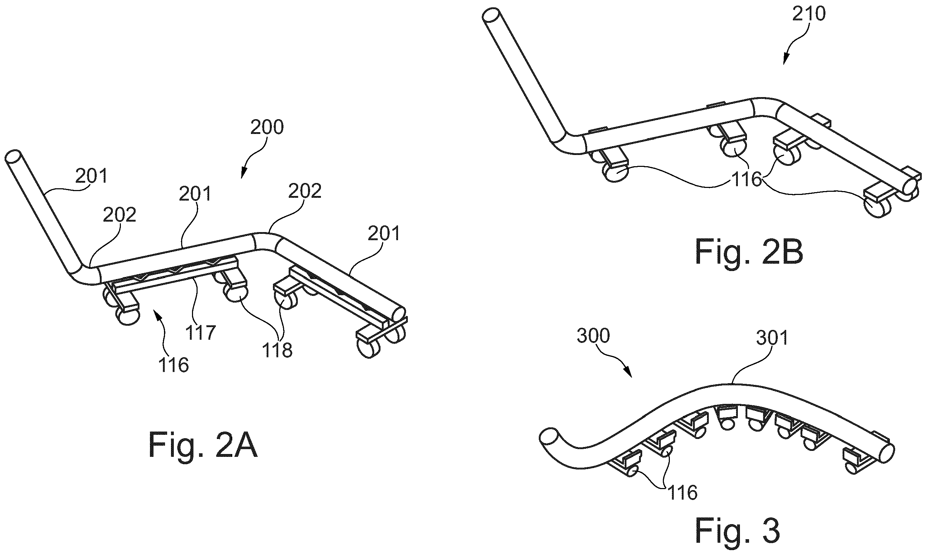

Figure 2A illustrates a partial view of a first embodiment of a transfer line arrangement 200 according to the present disclosure. The transfer line arrangement 200 comprises double walled rigid pipe sections 201 which are connected by flexible double-walled pipe sections 202 composed of corrugated tubes. The rigid pipe sections 201 rest on carriers 116 composed of a chassis 117 rolling on swivel castors 118 similar to conventional pantographs 106. Figure 2A only shows three rigid pipe sections 201 which are connected by two flexible pipe sections 202. However, the transfer line arrangement 200 may comprise also only two more than three rigid pipe sections 201 which are connected by flexible pipe sections 202. In one embodiment of the transfer line arrangement 200, the ends of the transfer line arrangement 200 are provided with Johnson couplings configured to provide connections for cryogenic fluids. By manually moving the transfer line arrangement 200, the distance between the fluid source, such as a fluid reservoir, and a fluid tank to be filled with the fluid can be bridged by the transfer line arrangement 200. Likewise, a height difference between the fluid reservoir and the tank to be filled can be bridged, too. In contrast to the swivel joints 113 the flexible pipe sections 202 are leak tight by construction such that even gaseous hydrogen cannot escape from the transfer line arrangement.

Figure 2B shows another embodiment of a transfer line arrangement 210 using different carriers 116 without a chassis 117. Advantageously, the transfer line arrangement 210 is lighter than the transfer line arrangement 200 which facilitates its handling.

Figure 3 shows yet another embodiment of the transfer line arrangement 300 according to the present disclosure which is composed entirely by flexible double-walled transfer line 301, which rests on individual carriers 116 that are movable in all directions.

Even though the embodiments of the present disclosure have been mainly described in connection with double walled transfer lines it is noted that the present disclosure is applicable to any multiwalled transfer line and by no means limited to double-walled transfer lines.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 101: Aircraft
- 102: Wing
- 103: landing gear
- 104: ground

- 106: Pantograph
- 107: underground hydrant
- 108, 109: end of pantograph

- 111: tank connection
- 112: rigid pipes
- 113: swivel joints
- 114: 90° bend

- 116: Carrier
- 117: Chassis
- 118: swivel castors

- 200: Transfer line arrangement
- 201: Rigid pipe sections
- 202: Flexible pipe sections

- 210: Transfer line arrangement

- 300: Transfer line arrangement
- 301: Flexible transfer line

## Claims

1. Transfer line arrangement comprising a transfer line (201,220) for fluids and a support structure (116,117,118) attached to the transfer line, wherein the transfer line comprises flexible sections (202) enabling pivotable movement of the transfer line around an axis such that one end of the transfer line is connectable to a connector at a fluid source (107) for a fluid and the other end of the transfer line is connectable with a connector (111) at a tank to be filled with fluid **characterized in that** the transfer line comprises vacuum insulated multiwalled tubes.

2. Transfer line arrangement according to claim 1, wherein the transfer line arrangement comprises rigid and flexible sections (201,202) enabling compensating distance and difference in height between the connector of the fluid source (107) and the connector (111) of the tank to be filled.

3. Transfer line arrangement according to claim 1 or 2, wherein multiwalled corrugated tubes form the flexible sections (202) of the transfer line.

4. Transfer line arrangement according to claim 3, wherein the flexible sections are provided with gimbals limiting the degrees of freedom of the flexible sections.

5. Transfer line arrangement according to one of claims 2 to 4, wherein the transfer line comprises rigid multiwalled tube sections (201) connected by the flexible sections (202).

6. Transfer line arrangement according to one of the preceding claims, wherein the support structure (116,117,118) is movable in a horizontal plane.

7. Transfer line arrangement according to one of the preceding claims, wherein the support structure comprises a deflection arm fixed to an immobile object.

8. Transfer line arrangement according to one of the preceding claims, wherein the support structure comprises a rollable carrier (116,117,118) that can role in all directions in a horizontal plane.

9. Transfer line arrangement according to one of the preceding claims, wherein the transfer line is composed in its entirety by a multiwalled flexible tube (301) resting on the support structure.
